# EUROPÄISCHE PATENTSCHRIFT

(11) **EP 4 085 508 B1**
(45) Veröffentlichungstag und Bekanntmachung des Hinweises auf die Patenterteilung: **19.06.2024**
(21) Anmeldenummer: 20838551.8
(22) Anmeldetag: 22.12.2020
(51) Int. Cl.: H02J 50/00, H02J 50/10, H02J 50/80, H02J 50/90

(54) **VERSORGUNGSEINRICHTUNG, ENERGIEVERSORGUNGSSYSTEM SOWIE VERFAHREN ZUR ELEKTRISCHEN ENERGIEVERSORGUNG**
SUPPLY DEVICE, ENERGY SUPPLY SYSTEM AND METHOD FOR ELECTRIC ENERGY SUPPLY
DISPOSITIF D'ALIMENTATION, SYSTÈME D'ALIMENTATION EN ÉNERGIE ET PROCÉDÉ D'ALIMENTATION EN ÉNERGIE ÉLECTRIQUE

(30) Priorität: 03.01.2020 DE 102020100075
(43) Veröffentlichungstag der Anmeldung: 09.11.2022
(73) Patentinhaber: PohlCon GmbH, 12057 Berlin (DE)
(72) Erfinder: THIELE, Dennis, 10827 Berlin (DE)
(74) Vertreter: Schulz Junghans Patentanwälte PartGmbB
(86) Internationale Anmeldenummer: PCT/EP2020/087668
(87) Internationale Veröffentlichungsnummer: WO 2021/136729

(56) Entgegenhaltungen:
- WO-A2-2009/047768
- DE-A1-102011 118 564
- DE-A1-102013 103 144
- US-A1- 2009 127 937
- US-A1- 2010 219 183

## Beschreibung

Aus ästhetischen Gründen sowie teilweise auch aus praktischen Erwägungen ist es zunehmend gewünscht, insbesondere im Bodenbereich von Räumen keine oder nur verdeckt angeordnete und demzufolge nicht sichtbare Zugänge zu elektrischen Versorgungsanlagen vorzusehen.

Dies erfordert entsprechende Einbauten im Bodenbereich oder auch im Wandbereich. Zudem können sich dadurch bei nicht sachgemäßer Verarbeitung gegebenenfalls Stolperfallen bilden. Weiterhin bedarf es zur Installation derartiger Einrichtungen eines relativ hohen technologischen Aufwandes, der zudem im Baubetrieb mit anderen Gewerken zu koordinieren ist.

Nach der Installation derartiger Einrichtungen sind diese jedoch absolut ortsfest, sodass es oftmals notwendig ist, auf dem Fußboden Verlängerungskabel zu verlegen, um die Position eines Verbrauchers mit dem elektrischen Zugang zu verbinden. Auch dies führt relativ häufig zu einer Minderung des ästhetischen Erscheinungsbildes sowie gegebenenfalls zur Störung von Personen oder auch von Anlagen, insbesondere beweglichen Anlagen, im Raum.

Es sind bereits unterschiedliche Versorgungseinrichtungen bekannt.

Die DE 10 2013 103 144 A1 offenbart eine Ladevorrichtung für ein mobiles Endgerät zum Aufladen eines Energiespeichers, insbesondere eines Akkumulators des mobilen Endgeräts, wobei die Ladevorrichtung eine Empfangseinheit, die angepasst ist magnetische Energie zu empfangen und die empfangene magnetische Energie in elektrische Energie umzuwandeln, und ein mit der Empfangseinheit gekoppeltes Kabel an dessen freien Ende ein Anschlussstecker zum Anschließen des Kabels an das mobile Endgerät vorgesehen ist, um die elektrische Energie an den Energiespeicher des mobilen Endgeräts zu übertragen, aufweist.. Damit stellt die DE 10 2013 103 144 A1 eine Versorgungseinrichtung zur Versorgung mit elektrischer Energie zur Verfügung, umfassend eine Tragstruktur sowie in oder an der Tragstruktur eine Empfangseinrichtung zum Empfang elektrischer Energie mittels induktiver Kopplung und in oder an der Tragstruktur eine Anschlusseinrichtung zur Realisierung eines elektrischen Anschlusses an der Empfangseinrichtung.

Die WO2009/ 047768 A2 lehrt ein System zum Versorgen eines Arbeitsbereichs mit Strom durch Induktion, welches mindestens einen in einer Begrenzungsfläche des Arbeitsbereichs eingebauten induktiven Stromausgang umfasst. Die induktive Steckdose umfasst mindestens eine Primärinduktivität, die über einen Treiber mit einer Stromversorgung verbindbar ist. Der Treiber stellt der primären Spule eine oszillierende Spannungsversorgung bereit, und die primäre Spule kann induktiv mit einer sekundären Spule koppeln, die mit einer elektrischen Last verdrahtet ist.

Die Erfindung liegt daher die Aufgabe zugrunde, eine Versorgungseinrichtung, ein Energieversorgungssystem sowie ein Verfahren zur elektrischen Energieversorgung zur Verfügung stellen, mit denen in ästhetisch ansprechender Weise sicher und flexibel einem Nutzer elektrische Energie zur Verfügung gestellt werden kann.

Diese Aufgabe wird gelöst durch die erfindungsgemäße Versorgungseinrichtung nach Anspruch 1, durch das erfindungsgemäße Energieversorgungssystem nach Anspruch 9 sowie durch das erfindungsgemäße Verfahren zur elektrischen Energieversorgung nach Anspruch 13.

Vorteilhafte Ausgestaltungen der Versorgungseinrichtung sind in den Unteransprüchen 2-8 angegeben. Vorteilhafte Ausgestaltungen des Energieversorgungssystems sind in den Unteransprüchen 11-12 angegeben. Erfindungsgemäß wird eine Versorgungseinrichtung zur Versorgung mit elektrischer Energie zur Verfügung gestellt, welche eine Tragstruktur sowie in oder an der Tragstruktur eine Empfangseinrichtung zum Empfang elektrischer Energie mittels induktiver Kopplung umfasst. In oder an der Tragstruktur weist die Versorgungseinrichtung eine Anschlusseinrichtung zur Realisierung eines elektrischen Anschlusses an der Empfangseinrichtung auf.

Des Weiteren umfasst die Versorgungseinrichtung eine Detektionseinheit zur Detektion eines definierten Magnetfeldes und/oder der Erreichung einer definierten Position in Bezug zum detektierten Magnetfeld und/oder zur Freischaltung eines Versorgungsbetriebs bei Detektion des Magnetfeldes bzw. der Position.

Die Detektionseinheit ist dazu eingerichtet, ein definiertes Magnetfeld und/oder eine definierte Position in Bezug zum Magnetfeld visuell wahrnehmbar darzustellen.

Eine solche Versorgungseinrichtung kann auch als "Socketbox" bezeichnet werden.

Eine derartige Anschlusseinrichtung kann insbesondere eine herkömmliche, genormte Steckdose sein. Insbesondere sind mehrere derartiger Steckdosen an der Versorgungseinrichtung angeordnet oder in der Versorgungseinrichtung integriert.

Gegebenenfalls ist eine derartige Steckdose auch als USB-Steckplatz ausgeführt. Der USB-Steckplatz kann dabei nicht nur als Schnittstelle für Datenübermittlung genutzt werden, sondern zusätzlich oder auch gleichzeitig als Energieversorgungsschnittstelle im Sinne einer elektrischen Steckverbindung. Der USB-Steckplatz kann gemäß dem USB-C- Standard ausgeführt sein.

In einer speziellen Ausführungsform ist vorgesehen, dass die Anschlusseinrichtung ebenfalls zur kontaktlosen Energieübertragung auf ein Endgerät eingerichtet ist.

Der Vorteil der erfindungsgemäßen Versorgungseinrichtung besteht insbesondere darin, dass sie kabellos zur Energieversorgung einsetzbar ist, wenn sie in einem bzw. auf oder über einem Induktionsfeld positioniert ist.

Es ist somit keine Bodendose im Fußboden vorzusehen zur Anordnung von Steckdosen. Des Weiteren werden auch keine Wand-Steckdosen benötigt. Dies führt zu einem optisch ansprechenden und einheitlichen Erscheinungsbild des Bodens sowie der Wände eines Gebäudes beziehungsweise eines Raums sowie zu dem Vorteil, dass keine Stolperfallen im oder auf dem Fußboden gebildet sind, weniger technologischer Aufwand zu betreiben ist, um im Bodenbereich bzw. im Wandbereich elektrische Energie zur Verfügung zu stellen. Zudem kann die Reinigung von Fußböden und Wänden einfacher erfolgen.

Es ist weiterhin eine Versiegelung des Fußbodens sowie gegebenenfalls der Wände eines Raumes möglich.

Weiterhin kann dadurch sicherheitstechnischen Erfordernissen in einfacher Weise entsprochen werden, da es zum Beispiel möglich ist, den Fußboden und den unteren Bereich von Wänden einem feuchten Medium auszusetzen.

Bei mehreren Versorgungseinrichtungen in einem Raum ermöglichen diese weiterhin eine räumlich sehr flexible Energiezufuhr und benötigen entsprechend weniger bzw. keine auf dem Boden zu verlegenden Verbindungskabel.

Die Versorgungseinrichtung kann Bestandteil eines Gestells, wie z.B. einer Traverse, oder auch eines Gehäuses sein. Die Versorgungseinrichtung kann des Weiteren Bestandteil eines Möbelstücks sein, zum Beispiel eines Rednerpults oder eines Möbelstücks eines Arbeitsplatzes in einem Büro oder einer Werkshalle. Außerdem kann die Versorgungseinrichtung einen Aufnahmeraum aufweisen zwecks Verstauens eines Kabels, wobei in dem Aufnahmeraum eine Abrolleinrichtung vorgesehen sein kann, auf welcher ein Kabel ab- oder aufrollbar ist.

Insbesondere kann die Detektionseinheit eine Infrarot-Einrichtung aufweisen, mit der ein Infrarot-Signal detektierbar ist, welches von einer Sendeeinrichtung erzeugt wird, um bei Erkennung eines bestimmten Signals die Erzeugung eines Magnetfeldes zu initiieren.

Diese Anzeige des definierten Magnetfeldes und/oder einer definierten Position in Bezug zum Magnetfeld kann insbesondere durch ein oder mehrere LED realisiert sein, mit denen eine Information hinsichtlich einer optimalen Positionierung ausgebbar ist.

Insbesondere kann die Tragstruktur ein Gehäuse sein. In einer Ausführungsform ist vorgesehen, dass bei einer quaderförmigen Ausgestaltung des Gehäuses an allen Seitenflächen bis auf die Unterseite des Gehäuses wenigstens eine Steckdose angeordnet ist.

In einem Querschnitt parallel zu einem kann das Gehäuse rund oder eckig ausgestaltet sein.

Je nach geometrischer Form kann ebenfalls eine Primärseite eines mit der Versorgungseinrichtung ausgestatteten Energieversorgungssystems ebenfalls im Querschnitt rund oder eckig ausgeführt sein.

Bei Ausführung der Versorgungseinrichtung als Bestandteil eines Gehäuses kann somit die Tragstruktur einen Bestandteil des Gehäuses ausbilden.

Alternativ oder hinzukommend zu der genannten Anzeige ist vorgesehen, dass zumindest eine LED bzw. Lichtsignaleinrichtung dazu eingerichtet ist, ein entsprechendes Signal auszugeben, wenn die Versorgungseinrichtung nicht in einer optimalen Position angeordnet ist. Diese Ausführungsform erleichtert die Positionierung der Versorgungseinrichtung an einer Stelle, an der es einem induzierten Magnetfeld ausgesetzt werden kann, ohne dass es dafür weiterer Anzeige-Einrichtungen bedarf. Eine bestimmte Licht-Farbe kann dabei eine zusätzliche Information hinsichtlich der Einsatzbereitschaft der Versorgungseinrichtung liefern.

Des Weiteren kann an zumindest einer Seite der Tragstruktur wenigstens eine Empfangseinrichtung zum Empfang elektrischer Energie mittels induktiver Kopplung angeordnet sein. In dieser Ausgestaltung ist die mit der Empfangseinrichtung ausgestattete Seite eine Seite der Tragstruktur, die nicht zur Aufstellung auf einem Boden eingerichtet ist.

Außerdem kann an mehreren, im Wesentlichen rechteckig zueinander ausgerichteten Seitenflächen des Gehäuses bzw. der Tragstruktur jeweils wenigstens eine Sekundär-Spule angeordnet sein, sodass die Versorgungseinrichtung dazu eingerichtet ist, sowohl bei einem einen Boden durchdringenden Magnetfeld sowie auch bei einem eine Wand durchdringenden Magnetfeld Energie über die jeweilige Empfangseinrichtung aufzunehmen.

In einer vorteilhaften Ausführungsform der Versorgungseinrichtung ist vorgesehen, dass diese für eine Übertragungs-Leistung bis zu 3000 W eingerichtet ist.

Die Versorgungseinrichtung kann wenigstens einen elektrischen Energiespeicher aufweisen. Dieser Energiespeicher, in Form einer Batterie, ist vorzugsweise ebenfalls innerhalb des Gehäuses angeordnet, gegebenenfalls demontierbar. Die Speicherkapazität einer solchen Batterie beträgt vorzugsweise mindestens 42000 mAh. In einer vorteilhaften Ausführungsform beträgt die Speicherkapazität der Batterie maximal 60.000 mAh. Dabei ist die Erfindung nicht auf eine Ausführungsform mit Energiespeicher eingeschränkt.

Insgesamt sollte die Versorgungseinrichtung vorteilhafterweise kein größeres Volumen haben als 12000 cm². Zwecks ausreichender Mobilität der Versorgungseinrichtung ist anzustreben, dass deren Gewicht nicht mehr als 4 kg beträgt.

Gegebenenfalls kann die erfindungsgemäße Versorgungseinrichtung mit einer Trageeinrichtung ausgestaltet sein, die es ermöglicht, die Versorgungseinrichtung in ergonomischer Weise durch eine Person zu transportieren. Die Trageeinrichtung kann ein nach oben verlängerter Griff sein, der es einer Person erleichtert, ohne sich zu bücken die Versorgungseinrichtung vom Boden anzuheben und zu verlagern.

Hinzukommend oder alternativ ist eine Ausstattung der Versorgungseinrichtung mit einer Rolleinrichtung vorgesehen. Diese kann weiterhin eine Bremse aufweisen, um eine Transport-Bewegung der Versorgungseinrichtung abzubremsen und dadurch die Positionierung zu erleichtern.

In weiterer Ausgestaltung können alternativ zur Rolleinrichtung bzw. zusätzlich zur Rolleinrichtung Aufstell-Füße an der Tragstruktur angeordnet sein, zwecks Erhöhung der Reibung auf dem Fußboden bei seitlich wirkenden Kräften, um damit einem unbeabsichtigten Verschieben der Versorgungseinrichtung entgegenzuwirken. Dabei bietet es sich an, zum Beispiel vier Füße an einer Außenseite der Tragstruktur zu positionieren, oder einen einzelnen, mittigen Fuß.

In einer weiteren Ausführungsform ist vorgesehen, dass die Aufstell-Füße derart hoch ausgeführt sind, dass auch Schnittstellen bzw. Anschlusseinrichtungen an der Unterseite der Tragstruktur insbesondere für die Einführung von Steckverbindern zugängig sind.

Zusätzlich oder in alternativer Ausgestaltung ist die Versorgungseinrichtung als ein Empfangsteil einer W-LAN-Anlage ausgestaltet. In dieser Ausgestaltung kann die Versorgungseinrichtung über eine Steckverbindung einem Nutzer einen Internet- oder anderweitigen Netzwerkzugriff zur Verfügung stellen.

In dieser Ausführungsform kann die erfindungsgemäße Versorgungseinrichtung zumindest eine Steck-Datenschnittstelle zur Übermittlung von Daten umfassen. Das bedeutet, dass die Versorgungseinrichtung weiterhin wenigstens einen Kabelanschluss für ein Datenkabel aufweisen kann, zwecks kabelgebundener Übertragung von Daten bzw. Informationen.

Zur effizienteren Energieübertragung kann vorgesehen sein, dass die Versorgungseinrichtung einen Gleichrichter zur Umwandlung von Wechselspannung in Gleichspannung umfasst. Durch die magnetische Induktion wird eine Wechselspannung in der Empfangseinrichtung induziert. Zwecks Versorgung von Verbrauchern mit einer Gleichspannung wird die induzierte Wechselspannung von dem Gleichrichter umgewandelt.

Ein weiterer Aspekt der vorliegenden Erfindung ist ein erfindungsgemäßes Energieversorgungssystem, welches eine erfindungsgemäße Versorgungseinrichtung sowie ein Trennelement aufweist, an oder in dem die Versorgungseinrichtung angeordnet oder anordbar ist. Weiterhin umfasst das Energieversorgungssystem eine Sendeeinrichtung zur Erzeugung eines magnetischen Feldes zwecks Übertragung elektrischer Energie mittels induktiver Kopplung auf die Versorgungseinrichtung, wobei die Sendeeinrichtung auf einer Seite des Trennelements angeordnet ist, welche einer raumbegrenzenden Seite des Trennelements gegenüberliegt. Die Sendeeinrichtung und die Empfangseinrichtung der Versorgungseinrichtung sind erfindungsgemäß dazu ausgestaltet, durch Induktion elektrische Energie zu übertragen.

Das Trennelement begrenzt mit einer Oberfläche einen Raum, wie zum Beispiel einen Raum eines Gebäudes. Insbesondere ist das Trennelement ein Raumboden. Die Versorgungseinrichtung ist auf der dem Raum gegenüberliegenden Seite des Trennelements bzw. eines Bereichs des Trennelements angeordnet.

Die Sendeeinrichtung ist somit als flurbündiges bzw. unterfluriges System, vorzugsweise in Form eines sogenannten Pads, ausgeführt.

Insbesondere kann das Trennelement aus Beton ausgeführt sein. In alternativer Ausführungsform ist das Trennelement ein Kunststoffteil, welches in einen Fußboden oder auch in eine Wand integriert werden kann.

In einer Ausführungsform ist vorgesehen, dass die Versorgungseinrichtung lediglich mit einer Estrich-Schicht überdeckt ist, sodass die Estrich-Schicht das Trennelement ausbildet.

In alternativer Ausgestaltung ist das Trennelement eine einen Raum begrenzende Wand. Eine derartige Wand kann ebenfalls eine Sendeeinrichtung in Form einer Induktionsspule aufweisen.

Das Trennelement hat hinsichtlich des von der Sendeeinrichtung erzeugten Magnetfeldes vorteilhafterweise eine magnetische Permeabilität mit der Permeabilitätszahl µr, wobei gilt: 0 < µr <1.

Bei bestimmungsgemäßer Anordnung der erfindungsgemäßen Versorgungseinrichtung befindet sich das Trennelement oberhalb der Sendeeinrichtung und deckt diese ab.

Das Trennelement ist entsprechend nicht magnetisierbar ausgestaltet. Das Trennelement bewirkt somit, dass bei dessen Durchdringung mit Magnetfeld keine bzw. geringe Magnetisierungsverluste auftreten können. Es ist zudem elektrisch nicht leitfähig.

Dabei kann die Einrichtung das Trennelement und die Sendeeinrichtung in unterschiedlichen Ebenen untereinander angeordnet aufweisen, oder die Sendeeinrichtung im Trennelement eingebettet aufweisen.

Insbesondere kann das Trennelement aus Beton gefertigt sein.

Der Beton des Trennelements kann die Komponenten Quarzsand mit einem Volumen-Anteil von 28 bis 38 % und Zement mit einem Volumen-Anteil von 23 bis 32 % aufweisen. Insbesondere können folgende Material-Gemische für das Trennelement zur Anwendung kommen:

### 1. Mischung Hochleistungsbeton

| | Anteile | | Dosierungsungenauigkeiten |
|---|---|---|---|
| Ausgangsstoff | Kg/m3 | l/m³ | M-% |
| Quarzsand | 1012 | 380 | ± 2,5 |
| Basaltmehl | 301 | 98 | ± 2,5 |
| Zement | 703 | 234 | ± 2,0 |
| Silikastaub | 117 | 50 | ± 5,0 |
| PP-Fasern | 82 | 10 | ± 10,0 |
| Zugabewasser | 198 | 198 | ± 3,0 |
| Fließmittel (FM) ³⁾ | 32 | 29 | ± 7,0 |
| Gesamt | 2445 | 1000 | |

Der Quarzsand hat vorzugsweise eine Körnung von 0,125 bis 0,5 mm.

Das Basaltmehl hat vorzugsweise eine Körnung von < 0,09 mm.

Der Zement ist vorzugsweise ein CEM III/A 52,5 nach DIN EN 206-1.

Der Silikastaub entspricht vorzugsweise dem Standard DIN EN13263-1.

Die PP-Fasern haben vorzugsweise ein Verhältnis vom Durchmesser d zur Länge I = 0,2 / 6 oder 0,2 / 8. In alternativer Ausgestaltung bilden die PP-Fasern ein Fasergewebe, wobei dann die Fasern gegebenenfalls die folgende Ausgestaltung haben: Durchmesser = 0,2 ± 0,03 mm, Länge = 6,0 ± 1,0 bis 12,0 ± 1,0 mm.

Weiterhin können die Fasern auch PE-Fasern oder AR-Glasfasern sein.

Die Fasern können ein drei-dimensionales Fasergewebe wie z.B. Glasfasergewebe PF-130-40x40 ausbilden. Das Fasergewebe ist vorzugsweise als Matte auszubilden.

Für das Fließmittel gelten die technischen Merkblätter bzw. DIN EN 934-2 und DIN V 18998.

Ein jeweiliges Fließmittel ist vorzugsweise auf PCE-Basis (Polycarboxylatetherbasis) ausgeführt.

### 2. Mischung Hochleistungsbeton

| | Anteile | | Dosierungsungenauigkeiten |
|---|---|---|---|
| Ausgangsstoff | Kg/m3 | l/m³ | M-% |
| Quarzsand | 914 | 344 | ± 2,5 |
| Basaltmehl | 320 | 104 | ± 2,5 |
| Zement | 768 | 239 | ± 2,0 |
| Silikastaub | 189 | 81 | ± 5,0 |
| PP-Fasern | 80 | 10 | ± 10,0 |
| Zugabewasser | 195 | 195 | ± 3,0 |
| Fließmittel | 29 | 27 | ± 7,0 |
| Gesamt | 2495 | 1000 | |

Der Quarzsand hat vorzugsweise eine Körnung von 0,125 bis 0,5 mm.

Das Basaltmehl hat vorzugsweise eine Körnung von < 0,09 mm.

Der Zement ist vorzugsweise ein CEM I 42,5 R nach DIN EN 206-1.

Der Silikastaub entspricht vorzugsweise dem Standard DIN EN13263-1.

Die PP-Fasern haben vorzugsweise ein Verhältnis vom Durchmesser d zur Länge I = 0,2 / 6 oder 0,2 / 8. In alternativer Ausgestaltung bilden die PP-Fasern ein Fasergewebe, wobei dann die Fasern gegebenenfalls die folgende Ausgestaltung haben: Durchmesser = 0,2 ± 0,03 mm, Länge = 6,0 ± 1,0 bis 12,0 ± 1,0 mm.

Weiterhin können die Fasern auch PE-Fasern oder AR-Glasfasern sein.

Die Fasern können ein drei-dimensionales Fasergewebe wie z.B. Glasfasergewebe PF-130-40x40 ausbilden. Das Fasergewebe ist vorzugsweise als Matte auszubilden.

Hinsichtlich des Fließmittels gelten die technischen Merkblätter bzw. DIN EN 934-2 und DIN V 18998.

Das Fließmittel ist ggf. auf PCE-Basis (Polycarboxylatetherbasis) ausgeführt.

### 3. Mischung Hochleistungsbeton

| | Anteile | | Dosierungsungenauigkeiten |
|---|---|---|---|
| Ausgangsstoff | Kg/m3 | l/m³ | M-% |
| Quarzsand | 741 | 279 | ± 2,5 |
| Basaltmehl | 351 | 114 | ± 2,5 |
| Zement | 845 | 263 | ± 2,0 |
| Silikastaub | 205 | 88 | ± 5,0 |
| AR-Fasern | 81 | 10 | ± 10,0 |
| PP-Fasern | 2,8 | 3 | ± 10,0 |
| Zugabewasser | 205 | 205 | ± 3,0 |
| Fließmittel | 42 | 38 | ± 7,0 |
| Gesamt | 2473 | 1000 | |

Der Quarzsand hat vorzugsweise eine Körnung von 0,125 bis 0,5 mm.

Das Basaltmehl hat vorzugsweise eine Körnung von < 0,09 mm.

Der Zement ist vorzugsweise ein CEM I 52,5 R nach DIN EN 206-1.

Der Silikastaub entspricht vorzugsweise dem Standard DIN EN13263-1.

Die AR-Fasern haben vorzugsweise einen Durchmesser von 0,2 ± 0,03 mm und eine Länge von 6,0 ± 1,0 bis 12,0 ± 1,0 mm. Alternativ sind sie als PE-Fasern ausgeführt.

Die Fasern können ein drei-dimensionales Fasergewebe wie z.B. Glasfasergewebe PF-130-40x40 ausbilden. Das Fasergewebe ist vorzugsweise als Matte auszubilden.

PP-Fasern haben vorzugsweise ein Verhältnis vom Durchmesser d zur Länge I = 0,018 / 4,6.

Hinsichtlich des Fließmittels gelten die technischen Merkblätter bzw. DIN EN 934-2 und DIN V 18998.

Das Fließmittel ist ggf. auf PCE-Basis (Polycarboxylatetherbasis) ausgeführt.

### 4. Mischung Hochleistungsbeton

| | Anteile | | Dosierungsungenauigkeiten |
|---|---|---|---|
| Ausgangsstoff | Kg/m3 | l/m³ | M-% |
| Quarzsand | 841 | 316 | ± 2,5 |
| Basaltmehl | 331 | 108 | ± 2,5 |
| Zement | 773 | 258 | ± 2,0 |
| Silikastaub | 129 | 55 | ± 5,0 |
| AR-Fasern | 80 | 10 | ± 10,0 |
| PP-Fasern | 2,8 | 3 | ± 10,0 |
| Zugabewasser | 218 | 218 | ± 3,0 |
| Fließmittel | 35 | 32 | ± 7,0 |
| Gesamt | 2410 | 1000 | |

Der Quarzsand hat vorzugsweise eine Körnung von 0,125 bis 0,5 mm.

Das Basaltmehl hat vorzugsweise eine Körnung von < 0,09 mm.

Der Zement ist vorzugsweise ein CEM I 52,5 R nach DIN EN 206-1.

Der Silikastaub entspricht vorzugsweise dem Standard DIN EN13263-1.

Die AR-Fasern haben vorzugsweise einen Durchmesser von 0,2 ± 0,03 mm und eine Länge von 6,0 ± 1,0 bis 12,0 ± 1,0 mm. Alternativ sind sie als PE-Fasern ausgeführt.

Die Fasern können ein drei-dimensionales Fasergewebe wie z.B. Glasfasergewebe PF-130-40x40 ausbilden. Das Fasergewebe ist vorzugsweise als Matte auszubilden.

PP-Fasern haben vorzugsweise ein Verhältnis vom Durchmesser d zur Länge I = 0,018 / 4,6.

Hinsichtlich des Fließmittels gelten die technischen Merkblätter bzw. DIN EN 934-2 und DIN V 18998.

Das Fließmittel ist ggf. auf PCE-Basis (Polycarboxylatetherbasis) ausgeführt.

### 5. Mischung Glasfaserbeton

| Glasfaserbeton | | Rohdichte: | | 2276 kg/m³ | Menge |
|---|---|---|---|---|---|
| | | Summe Stoffraum: | | 1000 l/m³ | |
| Ausgansstoffe | Masse [kg/m³] | Stoffraum [l/m³] | Mas. [%] | Vol. [%] | 50,00 Liter |
| Quarzsand | 985 | 370 | 43,29 % | 37,0 Vol.-% | 49,250 kg |
| Flugasche | 97 | 44 | 4,26 % | 4,4 Vol.-% | 4,850 kg |
| Zement | 780 | 244 | 34,28 % | 24,4 Vol.-% | 39,000 kg |
| Silikastaub | 91 | 39 | 4,00 % | 3,9 Vol.-% | 4,550 kg |
| Wasser | 280 | 280 | 12,30 % | 28,0 Vol.-% | 14,000 kg |
| Fließmittel | 15 | 14 | 0,66 % | 1,4 Vol.-% | 0,750 kg |
| AR-Fasern | 28 | 10 | 1,21 % | 1,0 Vol.-% | 1,380 kg |

Der Quarzsand hat vorzugsweise eine Körnung von 0,1 bis 0,63 mm.

Das Basaltmehl hat vorzugsweise eine Körnung von < 0,09 mm.

Der Zement ist vorzugsweise ein CEM I 52,5.

Das Wasser sollte Trinkwasser-Qualität haben.

Der Glasfaserbeton wird zusätzlich verstärkt durch ein dreidimensionales Fasergewebe wie z.B. wie z.B. Glasfasergewebe PF-130-40x40. Das Fasergewebe ist vorzugsweise als Matte zu verlegen.

### 6. Mischung Hochfester Leichtbeton

| Beschreibung | Leichtbeton mit geschlossenem Gefüge, Größtkorn ≤ 8 mm | |
|---|---|---|
| Ausgangsstoffe | Korngruppe | Menge |
| Zement | | 400 kg/m³ |
| Steinkohlenflugasche | | 200 kg/m³ |

| Leichtzuschläge | | |
|---|---|---|
| Blähton | 4 - 8 mm | 335 kg/m³ |
| Blähton - Leichtsand | 0 - 2 mm | 380 kg/m³ |
| Zugabewasser | | 235 kg/m³ |
| Fasergewebe | 130-40x40 | flächig |
| Fließmittel | | < 30 ml pro kg Zement |
| Stabilisierer | | < 15 g pro kg Zement |

Der Zement ist vorzugsweise nach DIN EN 206-1 definiert und ein CEM III 42,5 bzw. ein CEM I 52,5R.Die Steinkohlenflugasche ist vorzugsweise nach DIN EN 450 ausgeführt.

Leichtzuschläge sind vorzugsweise gemäß DIN 4226-2 bzw. DIN EN 13055 ausgeführt.

Das Fasergewebe ist vorzugsweise ein Glasfasergewebe.

Der Stabilisierer ist vorzugsweise ein Unterwassercompound.

Die Mischungsrezepturen zur Herstellung des aus Beton hergestellten Trennelements unterscheiden sich im Wesentlichen durch das Verhältnis der Mischungsbestandteile.

In Ausführungsformen des Trennelements sind die Hauptbestandteile für die Herstellung Zuschläge wie Quarzsand und Basaltmehl mit einem Größtkornanteil von kleiner als 0,5mm. Der Zuschlagsanteil an feinen Bestandteilen liegt bei 48 bis 55% der Gesamtmenge an Bestandteilen. Des Weiteren kommen Zusatzstoffe wie Microsilika oder Flugasche zum Einsatz, die ebenfalls sehr feine Bestandteile / Körnungen (< 0,1mm) haben. Durch die hohen Feinstbestandteile wird eine feine homogene Mischung erreicht, welche wiederum mit ihrem sehr hohen Mehlkorngehalt für die Dichtheit und Robustheit des Endproduktes sorgt.

Als Zement kommt in einzelnen Ausführungsformen entweder ein Portlandzement CEMI oder Hochofenzement CEM III nach EN 206-1 zum Einsatz, welches zwischen 28% bis 32% der Gesamtmenge ausmacht und überdurchschnittlich hoch im Vergleich zu normalen Betonen ist, da herkömmliche Betone einen Zementgehalt von ca. 12 bis 15% aufweisen. Durch den hohen Zementgehalt können hohe Druckfestigkeiten erreicht werden, die außerhalb des normierten Bereiches (gemäß Norm EN 206-1) liegen und größer sein können als 100 N/mm².

Damit die Mischung effizient verarbeitet werden kann und insbesondere die geforderte Konsistenz aufweist, wird neben der regulierten Wasserzugabe ein Hochleistungsfließmittel auf PCE (Polycarboxylatether)-Basis eingesetzt. Somit wird ebenfalls gewährleistet, dass bei kleinen Wasserzement-Werten, wie zum Beispiel bei weniger als 0,3, eine fließfähige Konsistenz hergestellt wird und die Mischungsrezeptur auch selbstverdichtend ist.

Der geringe Wasserzement-Wert hat den Vorteil, dass die Mischungsrezeptur und das Endprodukt sehr früh hohe Festigkeiten entwickelt, da die Zwischenräume der Körnungen, also der Abstand der Zementkörner untereinander, gering bleiben und damit festere und stärkere CSH-Verbindungen (Calcium-Silika-Hydrat-Verbindungen) entstehen. Der Anteil an PCE Fließmitteln beträgt insbesondere zwischen 5 bis 10 Masse-% vom Zementgehalt. Durch die weitere Zugabe von PP-Fasern (Polypropylen-Fasern) wird sichergestellt, dass der Brandschutz gewährleistet ist, denn die PP-Fasern schmelzen ab einer Temperatur von 100 °C und bilden in der Betonmatrix Hohlstellen, in welche der Wasserdampfdruck entweichen kann.

Der Anteil an PP-Fasern liegt in Ausführungsformen bei ca. 2 bis 4%.

Eine weitere Besonderheit der Materialgemische ist die Zugabe von

Leichtbetonzusatzstoffen. Diese können alternativ als Zuschlagsstoff eingesetzt werden, wodurch geringere Wärmeleitfähigkeiten und eine größere Wärmespeicherkapazität des Endproduktes erreichbar ist. Zudem wird durch die extrem hohe Alkalität der Mischungen und ihrer basischen Wirkung der Entstehung der Korrosion vorgebeugt.

Eine jeweilige genannte Mischung kann des Weiteren oder anstatt der genannten Fasern ungeordnet vorliegende alkaliresistente Glasfasern oder PP-Fasern aufweisen.

Eine erste einlagige Bewährung kann durch den Zusatz von Glasfasern ergänzt oder ersetzt werden.

Diese Ausführungsform kann somit in der gesamten Betonmischung lose bzw. ungeordnet angeordnete Fasern aufweisen.

In einer vorteilhaften Ausgestaltung der Einrichtung ist vorgesehen, dass das Trennelement eine Dicke von maximal 50 mm aufweist.

Das Trennelement kann eine Bewährung aufweisen in Form einer zwei-dimensionalen Gitterstruktur oder in Form einer drei-dimensionalen Gitterstruktur, wobei einzelne, die Gitterstruktur bzw. Bewährung ausbildende Stäbe Glasfaserstäbe sein können.

Gegebenenfalls kann die Bewährung auch in Form einer Schicht bzw. eines Geleges aus losen Glasfasern gebildet sein. Dabei können die Strukturelemente der Gitterstruktur Kunststofffasern umfassen. Das bedeutet, dass einzelne stab- oder strangförmige Strukturelemente mehrere Kunststofffasern aufweisen können, die miteinander mechanisch verbunden sind, oder aber auch aus einzelnen Kunststofffasern bestehen können.

In einer weiteren Ausführungsform ist vorgesehen, dass im Trennelement wenigstens ein Lichtleiter integriert ist zur Ausgabe optisch wahrnehmbarer Informationen.

Dieser Lichtleiter dient insbesondere zur Ausgabe von Lichtsignalen oder zur Anzeige von Textinformationen zur Unterstützung der Bedienung des Energieversorgungssystems. Der Lichtleiter führt zu diesem Zweck wenigstens an einer Stelle an die Außenseite des Trennelements.

Zwecks Ermöglichung einer langen Lebensdauer kann vorgesehen sein, dass das Trennelement eine Druckfestigkeit von mehr als 100 N/mm² aufweist.

In einer weiteren vorteilhaften Ausführungsform ist der Abstand der Sendeeinrichtung zu einem Untergrund unter der Sendeeinrichtung einstellbar.

Das erfindungsgemäße Energieversorgungssystem ist dazu eingerichtet, elektrische Energie mittels induktiver Kopplung zu übertragen, oder mittels resonant induktiver Kopplung zu übertragen. Bei der induktiven Kopplung wird die elektrische Energie mittels Induktion zwischen zwei Spulen übertragen. Bei der resonant induktiven Kopplung wird von einer Sende-Spule die Wechselspannung auf einen ersten Schwingkreis übertragen, von dem wiederum induktiv die Wechselspannung auf einen resonant schwingenden zweiten Schwingkreis übertragen wird. Von diesem zweiten Schwingkreis wird die Wechselspannung induktiv auf eine Empfangs-Spule übertragen.

Insbesondere in der Ausführungsform, in denen das Energieversorgungssystem zur Energieversorgung mittels resonant induktiver Kopplung eingerichtet ist, kann das Energieversorgungssystem auf der Primär-Seite, die der Sendeeinrichtung zugeordnet ist, umfassen:
- eine Energiequelle in Form einer Einrichtung zur Einspeisung elektrischer Energie aus einem Netz oder auch aus einer Batterie, um eine Wechselspannung 110 V oder 230 V mit einer Frequenz von 50 Hz oder auch 60 Hz zur Verfügung zu stellen;
- einen Leistungsfaktorkorrekturfilter (in der englischen Übersetzung: Power Factor Correction; PFC), der bewirkt, dass konstant Leistung von der Energiequelle zugeführt wird;
- damit gekoppelt ein Netzgleichrichter, beispielhaft ausgeführt als Diodenbrücke mit Kondensatoren, der bewirkt, dass lediglich pulsierende Wechselspannung mit dem gleichen Vorzeichen vorliegt;
- einen Zwischenkreis als Ausgang des Leistungsfaktorkorrekturfilters bzw. des Netzgleichrichters, in einer Funktion als Gleichrichter zwecks Umwandlung der pulsierenden Wechselspannung in Gleichspannung;
- einen Inverter, insbesondere einen Mittelfrequenz-Inverter, zur Umwandlung der vorliegenden Gleichspannung in hochfrequente Wechselspannung, insbesondere mit einer Frequenz von 20 kHz bis 400 kHz.
- die Sendeeinrichtung in Form einer Induktionsspule oder auch in Form einer Sende-Spule und eines ersten Schwingkreises.

Des Weiteren können auf der Primär-Seite wenigstens ein Transformator sowie Kondensatoren zur genauen Einstellung der anliegenden Wechselspannung angeordnet sein.

Auf der Sekundär-Seite des Energieversorgungssystems kann dieses umfassen:
- die Empfangseinrichtung zum Empfang elektrischer Energie mittels induktiver Kopplung, ausgebildet als Sekundär-Spule oder aber auch als resonant schwingender zweiter Schwingkreis und Empfangs-Spule;
- einen Gleichrichter, insbesondere einen Mittelfrequenz- Gleichrichter, zur Umwandlung der übertragenen Wechselspannung in Gleichspannung;
- einen Filter, insbesondere umfassend eine drosseln sowie wenigstens einen Kondensator, zwecks Glättung der erzeugten Gleichspannung.

Mit dem Filter in elektrischer Verbindung stehend umfasst das Energieversorgungssystem als Bestandteil der Versorgungseinrichtung die Anschlusseinrichtung zur Realisierung eines elektrischen Anschlusses und/oder einen elektrischen Speicher, in Form einer Batterie.

In einer vorteilhaften Ausführungsform des Energieversorgungssystems ist vorgesehen, dass das Trennelement eine optisch wahrnehmbare Markierung hinsichtlich des Bereichs aufweist, in welchem induktiv die Übertragung von Energie von der Sendeeinrichtung auf die Empfangseinrichtung vorgenommen werden kann.

Insbesondere definiert die Markierung einen Bereich, in welchem eine derartige induktive Energieübertragung mit einem Wirkungsgrad von wenigstens 50 % erfolgen kann.

Eine vorteilhafte Ausführungsform des Energieversorgungssystems sieht vor, dass der Wirkungsgrad größer als 90 % ist.

Hinzukommend oder alternativ kann das Energieversorgungssystem eine Erfassungseinrichtung aufweisen, die zur Detektion der Versorgungseinrichtung in einem räumlichen Bereich eingerichtet ist, in dem mittels der Sendeeinrichtung ein definiertes Magnetfeld erzeugbar oder erzeugt ist. Diese Erfassungseinrichtung kann ebenfalls zur Freischaltung eines Versorgungsbetriebs bei Vorliegen einer Information hinsichtlich der Positionierung der Versorgungseinrichtung in dem räumlichen Bereich eingerichtet sein.

Insbesondere kann die Erfassungseinrichtung eine Infrarot-Einrichtung aufweisen, mit der die Versorgungseinrichtung erkennbar ist. Zu diesem Zweck ist es vorteilhaft, wenn die Versorgungseinrichtung eine Einheit umfasst, mit der zumindest bereichsweise eine Änderung emittierten Lichts realisierbar ist, um die Erfassung mittels Infrarot-Technik zu ermöglichen.

Das bedeutet, dass die Versorgungseinrichtung und/oder das Energieversorgungssystem im Bereich der Sendeeinrichtung dazu ausgestaltet sein können, die jeweils andere Einheit in einem räumlich nahen Bereich zu detektieren. Die Versorgungseinrichtung ist zu diesem Zweck mit der Detektionseinheit ausgestattet, und das Energieversorgungssystem umfasst zu diesem Zweck die genannte Erfassungseinrichtung.

Die Detektionseinheit kann ein Signal aussenden, zum Beispiel ein Infrarot-Signal, welches von der Sendeeinrichtung empfangen wird, wobei vorgesehen ist, dass erst nach Prüfung und Verarbeitung des Signals von der Sendeeinrichtung ein Magnetfeld generiert wird.

In entsprechender Weise kann auch die Erfassungseinrichtung ein Signal aussenden, welches von der Empfangseinrichtung empfangen wird, wobei vorgesehen ist, erst nach Prüfung und Verarbeitung des Signals das Magnetfeld für die induktive Erstellung von Gleichspannung zu verwerten.

Die Erfindung kann des Weiteren derart ausgestaltet sein, dass im Fall der Unterbrechung des Signals auch die Generierung bzw. Verwertung des Magnetfeldes beendet wird.

Zu diesem Zweck kann jeweils ein kontinuierliches Signal ausgesendet werden.

Das Energieversorgungssystem kann des Weiteren derart ausgestaltet sein, dass nur miteinander kompatible Versorgungseinrichtungen sowie Sendeeinrichtungen für den Betrieb freigeschaltet werden.

In entsprechender Weise kann das Energieversorgungssystem eine Kompatibilitäts-Prüfeinrichtung umfassen, mit der die Versorgungseinrichtung und/oder die Sendeeinrichtung hinsichtlich ihrer Zulässigkeit zur Zusammenwirkung mit der jeweils anderen Einheit geprüft werden und erst bei festgestellter Kompatibilität eine induktive Übertragung ermöglicht wird.

Zur Positionierung der Sendeeinrichtung in oder unter einem Fußboden ist insbesondere eine Aufnahmeeinrichtung mit einer Nivelliereinheit zur Anordnung in dem Boden vorgesehen.

Diese Nivelliereinheit ist höhenverstellbar ausgestaltet, sodass die Neigung und/oder Höhenposition ihrer Oberseite in Bezug zu einer Aufstellfläche auf der Bodenoberseite einstellbar ist. Des Weiteren umfasst die Aufnahmeeinrichtung eine Trägereinrichtung, die an oder in der Nivelliereinheit mechanisch befestigt ist, sodass die Sendeeinrichtung von der Trägereinrichtung in senkrechter Richtung abgestützt ist.

Die senkrechte Richtung ist dabei definiert bei bestimmungsgemäßer Anordnung der Aufnahmeeinrichtung in einem Boden-Aufbau, sodass die Nivelliereinheit unter der Sendeeinrichtung angeordnet ist und die Gewichtskraft der Sendeeinrichtung und gegebenenfalls einer weiteren wirkenden Gewichtskraft abgestützt werden kann.

Insbesondere ist vorgesehen, dass die Sendeeinrichtung bzw. ihre Spulen auf der Trägereinrichtung aufliegt bzw. aufliegen.

Die Abstützung der Sendeeinrichtung erfolgt in einer Ausführungsform mittels einer flächig an der betreffenden Spule an deren Unterseite anliegenden Stahlplatte, oder alternativ in einer Abstützung an einem seitlichen, die Sendeeinrichtung einfassenden Rahmenbereich.

Die Nivelliereinheit sollte einstellbare Füße aufweisen, welche Schraubbolzen mit Endbereichen zur Abstützung auf einem Untergrund im Boden umfassen, wobei Außengewinde der Schraubbolzen mit Innengewinden an einem Gestell der Nivelliereinheit in Wirkverbindung stehen, sodass durch Schraubbewegung der Schraubbolzen der Abstand der Endbereiche zur Trägereinrichtung einstellbar ist. Damit ist die Höhenposition und/oder die Ausrichtung der Sendeeinrichtung in Bezug zum Untergrund und demzufolge auch zur Oberfläche einer zum Untergrund fest angeordneten Oberseite des Bodens einstellbar. Das Gestell der Nivelliereinheit kann insbesondere im Wesentlichen als Rahmen aus Blechelementen ausgebildet sein.

Bestandteil der Trägereinrichtung kann weiterhin eine Kassette sein, die zur formschlüssigen Aufnahme der Sendeeinrichtung zumindest am seitlichen Rand der Sendeeinrichtung dient. Diese Kassette ist vorzugsweise aus Edelstahl, Aluminium bzw. einer Aluminiumlegierung oder Kunststoff gefertigt.

Entsprechend ist hier vorgesehen, dass bei einer im Wesentlichen zwei-dimensionalen Erstreckung der Sendeeinrichtung diese an ihrem Randbereich von der Kassette umfasst ist. Des Weiteren wird dadurch die Sendeeinrichtung geschützt.

Die Trägereinrichtung kann außerdem eine Trägerplatte umfassen, die die Sendeeinrichtung in senkrechter Richtung abstützt. Die Trägerplatte hat ein zentrales Loch bzw. Öffnung, zur Durchführung von Leitungen zur Sendeeinrichtung.

In alternativer oder auch zusätzlicher Ausgestaltung hat die Trägereinrichtung an der Kassette einen Rahmen, der die Sendeeinrichtung von unten, also in senkrechter Richtung, zumindest bereichsweise abstützt.

Die Sendeeinrichtung bzw. eine oder mehrere ihrer Spulen kann in einem Material eingebettet sein, welches eine Druckfestigkeit von wenigstens 15 N/mm², insbesondere wenigstens 20 N/mm², bevorzugt mehr als 25 N/mm² aufweist. Dieses Material kann auch als Hochleistungskunststoff bezeichnet werden. Elektrische Anschlüsse der betreffenden Spule sind vorzugsweise als Kabel ausgeführt und führen aus dem einbettenden Material heraus. In einer Ausführungsform kann vorgesehen sein, dass zusätzlich zu einer betreffenden Spule gegebenenfalls auch Kommunikationselektronik einbettendes Material in die Kassette eingegossen ist.

In alternativer Ausführungsform ist die Sendeeinrichtung eine einzeln handhabbare Einheit, welche auf oder in die Trägereinrichtung legbar ist.

Entsprechend ist in dieser Ausgestaltung vorgesehen, dass bei der Montage nicht die Sendeeinrichtung mit einem die Sendeeinrichtung bereits umgebenden Material in eine Trägereinrichtung bzw. Kassette eingesetzt wird, sondern dass die Sendeeinrichtung in eine Trägereinrichtung bzw. Kassette eingelegt wird und dann von fließfähigem Material umgossen und eingeschlossen wird, so dass die Sendeeinrichtung nach Aushärtung bzw. Verfestigung dieses Materials in dem Material eingebettet ist.

Weiterhin kann das Energieversorgungssystem eine Steuereinheit aufweisen, dass an oder in der Nivelliereinheit mechanisch befestigt ist. In alternativer Ausführungsform ist vorgesehen, dass die Steuereinheit ebenfalls in dem einbettenden Material eingebettet ist.

Ein weiterer Aspekt der vorliegenden Erfindung ist ein erfindungsgemäßes Verfahren zur elektrischen Energieversorgung, bei dem ein erfindungsgemäßes Energieversorgungssystem bereit gestellt wird, mittels der Sendeeinrichtung ein Magnetfeld erzeugt wird und mittels des Magnetfeldes induktiv elektrische Energie auf die Versorgungseinrichtung übertragen wird. Die Energieübertragung kann mittels induktiver Kopplung oder mittels resonant induktiver Kopplung erfolgen.

Von der Versorgungseinrichtung kann die elektrische Energie einem Verbraucher zur Verfügung gestellt werden, durch Realisierung einer elektrischen Steckverbindung mit der Versorgungseinrichtung oder aber auch durch Speisung eines Energiespeichers in Form einer Batterie und Zurverfügungstellung des Energiespeichers für den Verbraucher.

Die vorliegende Erfindung wird im Folgenden anhand der in den beiliegenden Zeichnungen dargestellten Ausführungsbeispiele erläutert.

Es zeigen:
- Figur 1:: eine Aufnahmeeinrichtung zur Positionierung einer Sendeeinrichtung in Explosionsdarstellung,
- Figur 2:: den Aufbau einer Sendeeinrichtung in einer ersten perspektivischen Explosionsdarstellung,
- Figur 3:: den Aufbau einer Sendeeinrichtung in einer zweiten perspektivischen Explosionsdarstellung,
- Figur 4:: die Aufnahmeeinrichtung mit Sendeeinrichtung und angeschlossenem Kabelkanal in perspektivischer Ansicht,
- Figur 5:: den Aufbau eines Trennelements in Schnittansicht,
- Figur 6:: den Aufbau einer zweiten Ausführungsform des Trennelements in Schnittansicht,
- Figur 7:: den Aufbau einer dritten Ausführungsform eines Trennelements in Schnittansicht,
- Figur 8:: das erfindungsgemäße Energieversorgungssystem in perspektivischer Ansicht,
- Figur 9:: eine schematische Darstellung der Wirkungsweise des erfindungsgemäßen Energieversorgungssystems, und
- Figur 10:: eine schematische Darstellung der Wirkungsweise des Energieversorgungssystems bei der Detektion bzw. Erfassung der Sendeeinrichtung bzw. Empfangseinrichtung.

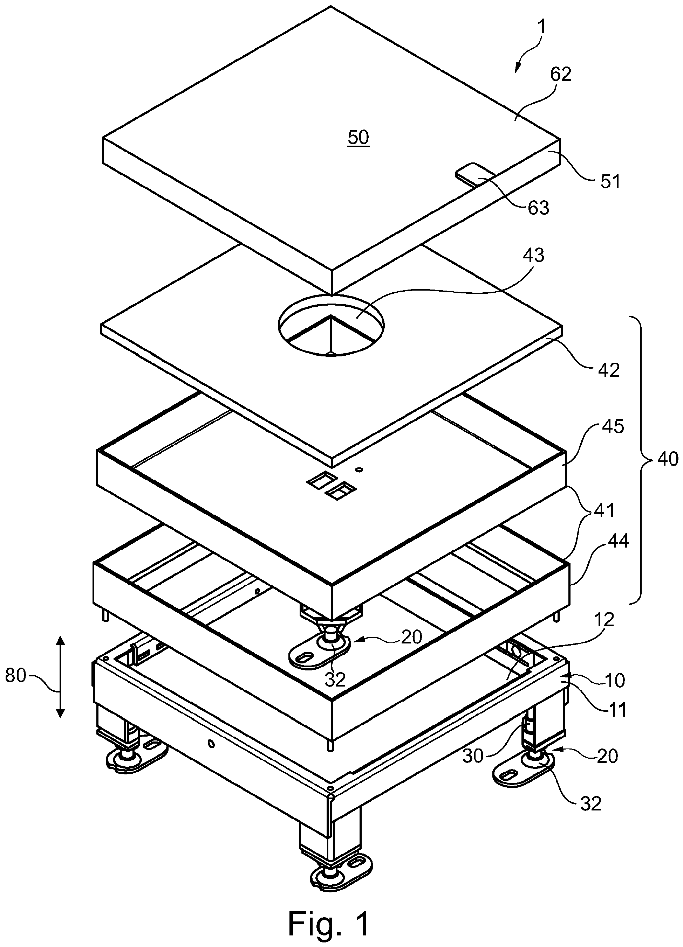

Eine Aufnahmeeinrichtung 1 zur Aufnahme der Sendeeinrichtung des Energieversorgungssystems ist in Figur 1 gezeigt. Sie umfasst eine Nivelliereinheit 10, die im Wesentlichen aus einem Gestell 11 bzw. Rahmen ausgebildet ist, an dessen vier Ecken jeweils ein Fuß 20 angeordnet ist.

Ein jeweiliger Fuß 20 umfasst einen Schraubbolzen 30, der in senkrechter Richtung 110 angeordnet ist. Der Endbereich 32 eines jeweiligen Schraubbolzens 30 ragt nach unten von dem Gestell 11 weg. Entsprechend ist die Nivelliereinheit 10 dazu eingerichtet, durch Verdrehung der Schraubbolzen 30 in ihrer Höhe und/oder ihrer Neigung eingestellt zu werden.

Oberhalb der Nivelliereinheit 10 stützt sich auf dieser eine Trägereinrichtung 40 ab, die in der hier dargestellten Ausführungsform eine Kassette 41 umfasst. Die Kassette 41 ist durch einen Rahmen 44 ausgebildet, der zur seitlichen Umfassung und demzufolge Aufnahme eines flachen Behälters 45 dient.

Weiterhin ist die hier dargestellte Aufnahmeeinrichtung 1 derart ausgeführt, dass in dem Behälter 45 eine Trägerplatte 42 angeordnet ist. Auf der Trägerplatte 42 und seitlich umschlossen vom Rand des Behälters 45 ist eine Sendeeinrichtung 50 angeordnet, welche eine hier nicht ersichtliche Induktionsspule umfasst. Die Trägerplatte 43 weist in ihrem Zentrum eine zentrale Öffnung 43 auf zwecks mechanischen Durchgriffs zu VerstellEinrichtungen (hier nicht dargestellt) bzw. zwecks Durchführung von elektrischen Leitungen.

Die Gewichtskraft der Sendeeinrichtung 50 sowie auch eine gegebenenfalls auf die Sendeeinrichtung 50 senkrecht wirkende Kraft kann somit von der Sendeeinrichtung 50 auf die Trägerplatte 42 geleitet und von dieser abgestützt werden. Entsprechend können auch in die Sendeeinrichtung 50 eingeleitete Biegemomente von der Trägerplatte 42 aufgenommen werden. Somit wird einer unzulässigen Verformung der Sendeeinrichtung 50 vorgebeugt.

Des Weiteren wird formschlüssig eine Fixierung der Sendeeinrichtung 50 durch Umfassung des seitlichen Randes 51 der Sendeeinrichtung 50 durch den Rand des Behälters 45 realisiert. Gleichzeitig wird dabei eine am seitlichen Rand 51 der Sendeeinrichtung 50 angeordnete Kommunikationsschnittstelle 63 mechanisch geschützt.

In der vorliegenden Darstellung ist lediglich das die Oberfläche der Sendeeinrichtung 50 ausbildende und eine in der Sendeeinrichtung 50 angeordnete Induktionsspule (hier nicht dargestellt) einbettende Material 62 erkennbar.

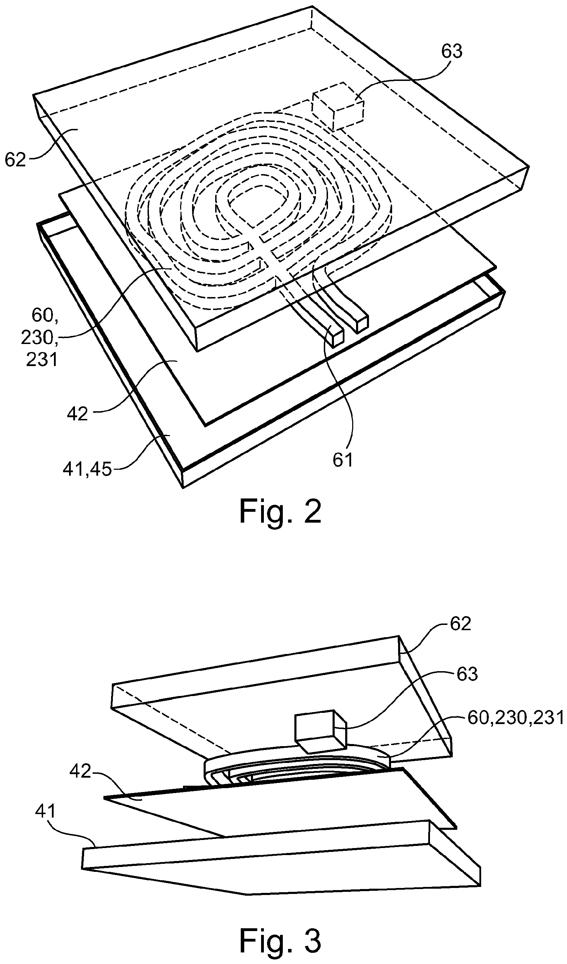

Figuren 2 und 3 zeigen in unterschiedlichen perspektivischen Explosionsdarstellungen den Aufbau der Sendeeinrichtung 50.

Es ist hier ersichtlich, dass in einem flachen Behälter 45 einer Kassette 41 eine Trägerplatte 42 aufgenommen ist. In dem vom Behälter 45 abgegrenzten Raum befindet sich eine Induktionsspule 60, die in einem einbettenden Material 62 eingebettet ist. Elektrische Anschlüsse 61 der Induktionsspule 60 führen aus dem einbettenden Material 62 heraus. Neben der Induktionsspule 60 ist in dem einbettenden Material 62 auch eine Kommunikationsschnittstelle 63 eingebettet.

Es ist weiterhin ersichtlich, dass die dargestellte Sendeeinrichtung 50 zur induktiven Energieübertragung eingerichtet ist.

Im Fall einer Ausführungsform zwecks resonant induktiver Energieübertragung wäre neben der dargestellten Spule noch Schwingkreis angeordnet.

Entsprechend stellt die hier gezeigte Induktionsspule 60 im Wesentlichen die Sendeeinrichtung 50 bzw. die Sekundär-Seite 230 des erfindungsgemäßen Energieversorgungssystems 200 dar.

Die Herstellung einer derartigen Sendeeinrichtung 50 kann derart erfolgen, dass ein Modul, umfassend das einbettende Material 62 und darin eingebettet die Induktionsspule 60 und gegebenenfalls auch die Kommunikationsschnittstelle 63, in den Behälter 45 der Trägereinrichtung 40 eingesetzt bzw. eingelegt wird.

In alternativer Ausführungsform wird der Behälter 45 der Trägereinrichtung 40 zur Verfügung gestellt, die Induktionsspule 60 sowie gegebenenfalls auch die Kommunikationsschnittstelle 63 werden in dem Behälter 45 positioniert und dann mit dem einbettenden Material 62 umgossen, welches aushärtet und somit eine feste Einheit zur Verfügung stellt.

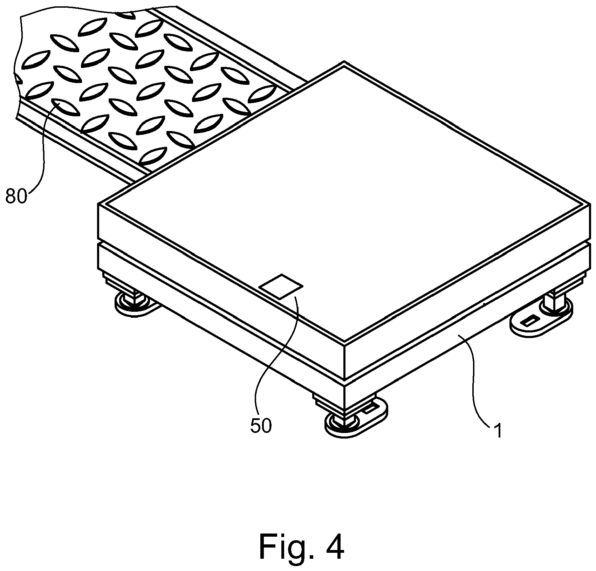

In Figur 4 ist die Aufnahmeeinrichtung 1 mit Sendeeinrichtung 50 und angeschlossenem, unterflurigem Kabelkanal 80 in perspektivischer Ansicht gezeigt. Hier ist deutlich ersichtlich, dass die Sendeeinrichtung 50 die Oberseite der aus Aufnahmeeinrichtung 1 und Sendeeinrichtung 50 gebildeten Gesamtheit ausbildet. Durch den angeschlossenen Kabelkanal 80 kann die Sendeeinrichtung 50 mit elektrischer Energie und/oder Steuersignalen versorgt werden.

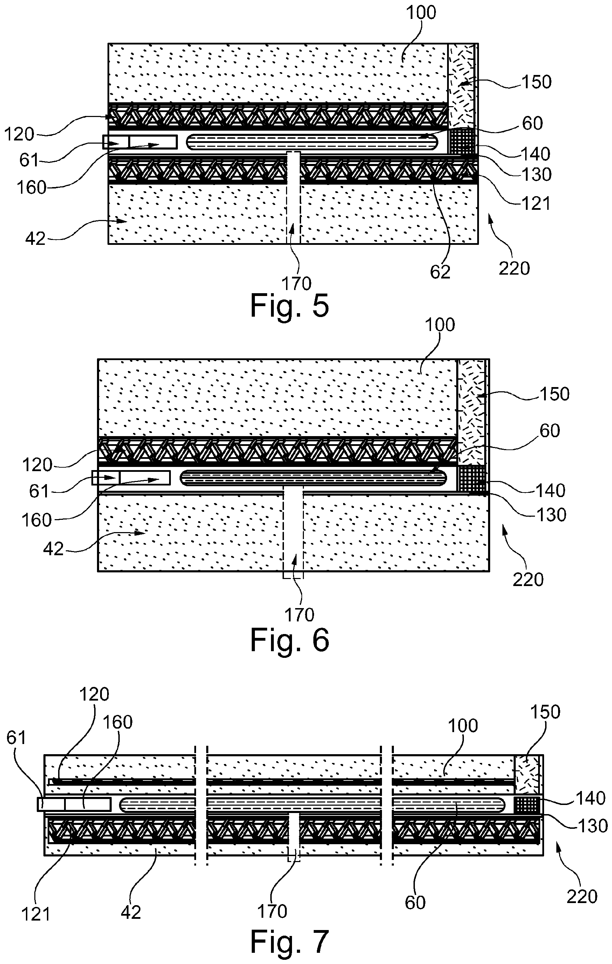

Figur 5 zeigt den Aufbau der Primär-Seite des Energieversorgungssystems 200 mit Trennelement 210 in Schnittansicht.

In dieser Ausführungsform ist die die Induktionsspule 60 stützende Trägerplatte 42 ebenfalls aus Beton ausgeführt. In der Trägerplatte 42 ist ein nach unten führender, unterer Kabelauslass 170 ausgebildet. Auf dieser Trägerplatte 42 liegt eine zweite Bewährungsschicht 121 auf. Diese zweite Bewährungsschicht 121 wird von einer Ferrit-Schicht 130 abgedeckt. Darauf befindet sich die Induktionsspule 60, die in einem hier nicht extra dargestellten einbettenden Material 62 eingebettet ist.

Seitlich neben der Induktionsspule 60 im Wesentlichen auf derselben Ebene ist eine Leistungselektronik 160 angeordnet und damit steuerungstechnisch verbunden ein elektrischer Anschluss 61. Auf der gegenüberliegenden Seite ist auf derselben Ebene eine Sensor-Einrichtung 140 zur Feststellung der Anwesenheit der Versorgungseinrichtung positioniert.

Über der Induktionsspule 60 bzw. über dem einbettenden Material 62 befindet sich eine erste Bewährungsschicht 120. Darauf befindet sich das aus Beton ausgeführte Trennelement 100. Seitlich neben dem Trennelement 100 sowie der ersten Bewährungsschicht 120 ist in der hier dargestellten Ausführungsform ein Lichtleiter 150 angeordnet, der nach oben und somit nach außen führt zwecks Ausgabe optisch wahrnehmbarer Informationen. In alternativer Ausführungsform können auch LED platziert sein, zwecks Ausgabe optisch wahrnehmbarer Informationen. Hinzukommend können Einrichtungen angeordnet sein zur Ausgabe von Infrarot-Licht.

Figur 6 zeigt einen alternativen Aufbau der Primär-Seite 220 des Energieversorgungssystems 200 mit Trennelement 100 in Schnittansicht.

Im Gegensatz zu der in Figur 5 dargestellten Ausführungsform ist in der in Figur 6 dargestellten Variante keine zweite Bewährungsschicht 121 vorhanden.

Figur 7 zeigt den Aufbau einer dritten Ausführungsform der Primär-Seite 220 des Energieversorgungssystems 200 mit Trennelement 100 in Schnittansicht, wobei hier im Gegensatz zu der in Figur 5 dargestellten Variante die erste Bewährungsschicht 120 im Trennelement 100 eingebettet ist und die zweite Bewährungsschicht 121 in der Trägerplatte 42, die hier ebenfalls aus Beton ausgeführt ist, eingebettet ist. Dieser Aufbau weist eine deutlich geringere Dicke auf als die Varianten gemäß Figuren 5 und Figur 6.

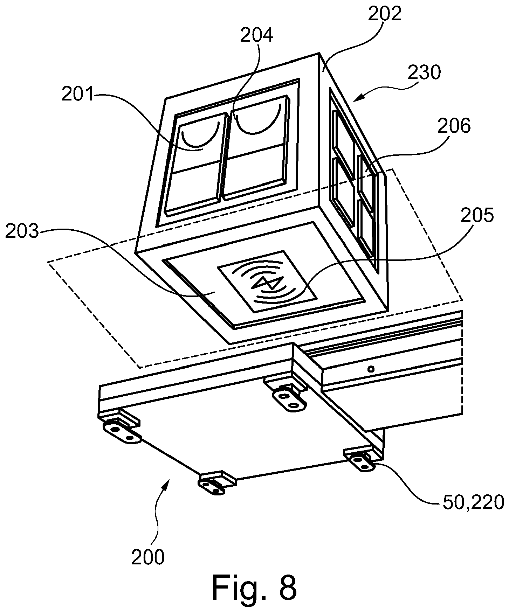

Figur 8 zeigt ein erfindungsgemäßes Versorgungssystem 200 in perspektivischer Ansicht von unten. Ersichtlich ist hierbei eine im Wesentlichen würfelförmige Versorgungseinrichtung 201, die als Tragstruktur 202 ein Gehäuse aufweist. In dieser Tragstruktur 202 sind in den Seitenwänden 204 mehrere Anschlusseinrichtungen 206 in Form von Steckdosen angeordnet. Diese Steckdosen können genormte Steckplätze sein zur Stromversorgung, oder auch USB- Steckdosen.

Die würfelförmige Ausgestaltung ist hier nur exemplarisch gezeigt, stattdessen kann die Versorgungseinrichtung 201 auch eine zumindest bereichsweise runde Form haben.

An der Unterseite 203 der gehäuseförmigen Tragstruktur 202 ist eine Empfangseinrichtung 205 angedeutet. Diese Empfangseinrichtung 205 ist insbesondere als Sekundär-Spule oder auch als Sekundär-Schwingkreis ausgestaltet und bildet somit die Sekundär-Seite 230 des Energieversorgungssystems 200 aus.

Die Primär-Seite 220 des Energieversorgungssystems 200 ist durch die hier dargestellte Sendeeinrichtung 50 ausgebildet. Zwischen der Primär-Seite 220 und der Sekundär-Seite 230 kann ein hier nur angedeutetes Trennelement 210 positioniert sein, wie zum Beispiel ein Fußboden eines Gebäudes.

Entsprechend kann von der Primär-Seite 220 elektrische Energie induktiv durch das Trennelement 210 zur Sekundär-Seite 230 übertragen werden und dort Nutzern zur Verfügung gestellt werden.

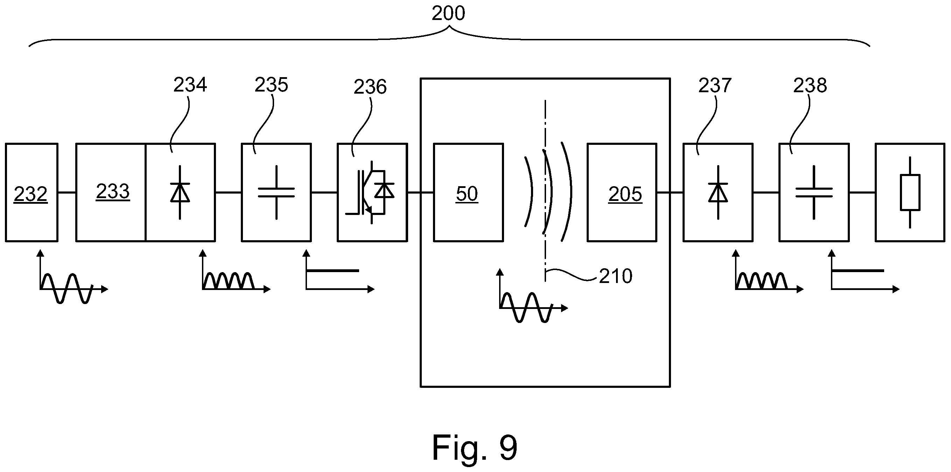

Figur 9 zeigt in einem Schaubild den generellen Aufbau des Energieversorgungssystems 200.

Dieses umfasst zumindest einen Anschluss an eine Energiequelle 232. Diese Energiequelle 232 ist in der hier dargestellten Ausführungsform mit einem Leistungsfaktorkorrekturfilter 233 elektrisch verbunden. Dieser Leistungsfaktorkorrekturfilter 233 ist elektrisch an einen Netzgleichrichter 234 angeschlossen. Die Einheit aus Leistungsfaktorkorrekturfilter 233 und Netzgleichrichter 234 wiederum ist elektrisch mit einem Zwischenkreis 235 gekoppelt. Dieser ist elektrisch angeschlossen an einen Inverter 236.

Der Inverter 236 ist schaltungstechnisch verbunden mit der Sendeeinrichtung 50, vorzugsweise ausgebildet als eine Spule oder auch als Schwingkreis.

Die Sendeeinrichtung 50 ist dazu eingerichtet, mittels induktiver Kopplung elektrische Energie auf die Empfangseinrichtung 205, die ebenfalls als Spule oder Schwingkreis ausgestaltet ist, zu übertragen.

Von der Empfangseinrichtung 205 wird die erzeugte Wechselspannung auf einen Gleichrichter 237 übertragen, der in der hier dargestellten Ausführungsform mit einem Filter 238 gekoppelt ist, um einen an das Energieversorgungssystem angeschlossenen Verbraucher 300 die elektrische Energie mit vorgeschriebenen oder gewünschten Parametern zur Verfügung zu stellen.

Die Funktionen der einzelnen Bestandteile des Energieversorgungssystems sind bereits in der allgemeinen Beschreibung der Erfindung erläutert worden.

Ergänzend dazu zeigen die angedeuteten Diagramme unter den einzelnen elektrischen Bauteilen die jeweils an der betreffenden Position des Flussschaubilds ausgeführte Funktion.

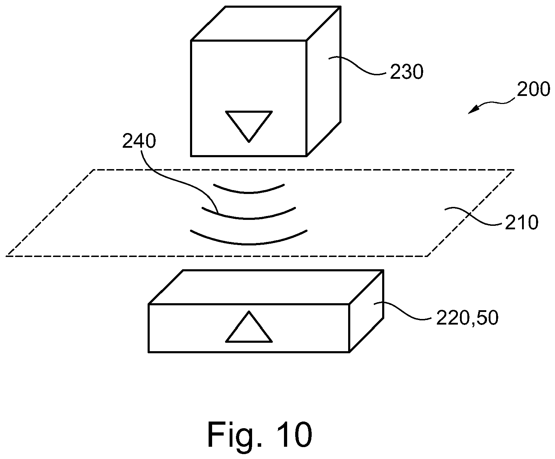

Ergänzend stellt Figur10 noch einmal das Energieversorgungssystem 200 in schematischer Ansicht dar.

Ersichtlich sind hier die Primär-Seite 220 und die Sekundär-Seite 230, getrennt durch ein angedeutetes Trennelement 210. In dieser Darstellung ist zu dem eine Signalübertragung 240 angedeutet, von der Sekundär-Seite 230 zur Primär-Seite 220, um vor dem eigentlichen induktiven Energieübertragungsprozess in einer automatischen Kommunikation die Authentifizierung der Sekundär-Seite 230 in Bezug zur Primär-Seite 220 zwecks Freischaltung des Energieversorgungssystems zu erreichen.

### Bezugszeichenliste

- 1: Aufnahmeeinrichtung
- 10: Nivelliereinheit
- 11: Gestell
- 20: Fuß
- 30: Schraubbolzen
- 32: Endbereich
- 40: Trägereinrichtung
- 41: Kassette
- 42: Trägerplatte
- 43: zentrale Öffnung
- 44: Rahmen
- 45: Behälter
- 50: Sendeeinrichtung
- 51: seitlicher Rand des Lademoduls
- 60: Induktionsspule
- 61: Elektrischer Anschluss
- 62: einbettendes Material
- 63: Kommunikationsschnittstelle
- 70: senkrechte Richtung
- 80: Kabelkanal
- 100: Trennelement
- 120: erste Bewährungsschicht
- 121: zweite Bewährungsschicht
- 130: Ferrit-Schicht
- 140: Sensor-Einrichtung
- 150: Lichtleiter
- 160: Leistungselektronik
- 170: unterer Kabelauslass
- 200: Energieversorgungssystem
- 201: Versorgungseinrichtung
- 202: Tragstruktur
- 203: Unterseite
- 204: Seitenwand
- 205: Empfangseinrichtung
- 206: Anschlusseinrichtung
- 210: Trennelement
- 220: Primär-Seite
- 230: Sekundär-Seite
- 232: Energiequelle
- 233: Leistungsfaktorkorrekturfilter
- 234: Netzgleichrichter
- 235: Zwischenkreis
- 236: Inverter
- 237: Gleichrichter
- 238: Filter
- 240: Signalübertragung
- 300: Verbraucher

## Patentansprüche

1. Versorgungseinrichtung (201) zur Versorgung mit elektrischer Energie, umfassend eine Tragstruktur (202) sowie in oder an der Tragstruktur (202) eine Empfangseinrichtung (205) zum Empfang elektrischer Energie mittels induktiver Kopplung und in oder an der Tragstruktur (202) eine Anschlusseinrichtung (206) zur Realisierung eines elektrischen Anschlusses an der Empfangseinrichtung (205), **dadurch gekennzeichnet, dass** die Versorgungseinrichtung (201) eine Detektionseinheit zur Detektion eines definierten Magnetfeldes und/oder der Erreichung einer definierten Position in Bezug zum detektierten Magnetfeld und/oder zur Freischaltung eines Versorgungsbetriebs bei Detektion des Magnetfeldes bzw. der Position umfasst, wobei die Detektionseinheit dazu eingerichtet ist, ein definiertes Magnetfeld und/oder eine definierte Position in Bezug zum detektierten Magnetfeld visuell wahrnehmbar darzustellen.

2. Versorgungseinrichtung nach Anspruch 1, **dadurch gekennzeichnet, dass** die Tragstruktur (202) ein Gehäuse ist.

3. Versorgungseinrichtung nach einem der vorhergehenden Ansprüche, **dadurch gekennzeichnet, dass** an zumindest einer Seite der Tragstruktur (202) wenigstens eine Empfangseinrichtung (205) zum Empfang elektrischer Energie mittels induktiver Kopplung angeordnet ist.

4. Versorgungseinrichtung nach einem der vorhergehenden Ansprüche, **dadurch gekennzeichnet, dass** diese für eine Übertragungs-Leistung bis zu 3000 W eingerichtet ist.

5. Versorgungseinrichtung nach einem der vorhergehenden Ansprüche, **dadurch gekennzeichnet, dass** die Versorgungseinrichtung (201) wenigstens einen elektrischen Energiespeicher aufweist.

6. Versorgungseinrichtung nach einem der vorhergehenden Ansprüche, **dadurch gekennzeichnet, dass** diese zumindest eine Steck-Datenschnittstelle zur Übermittlung von Daten umfasst.

7. Versorgungseinrichtung nach einem der vorhergehenden Ansprüche, **dadurch gekennzeichnet, dass** diese zumindest eine Funk-Schnittstelle zur Übermittlung von Daten über eine Funkverbindung umfasst.

8. Versorgungseinrichtung nach einem der vorhergehenden Ansprüche, **dadurch gekennzeichnet, dass** die Versorgungseinrichtung (201) einen Gleichrichter (234) zur Umwandlung von Wechselspannung in Gleichspannung umfasst.

9. Energieversorgungssystem (200), umfassend eine Versorgungseinrichtung (201) gemäß einem der Ansprüche 1 bis 8 sowie ein Trennelement (210), an oder in dem die Versorgungseinrichtung (201) angeordnet oder anordbar ist, sowie mit einer Sendeeinrichtung (50) zur Erzeugung eines magnetischen Feldes zwecks Übertragung elektrischer Energie mittels induktiver Kopplung auf die Versorgungseinrichtung (201), wobei die Sendeeinrichtung (50) auf einer Seite des Trennelements (210) angeordnet ist, welche einer raumbegrenzenden Seite des Trennelements (210) gegenüberliegt.

10. Energieversorgungssystem nach Anspruch 9, **dadurch gekennzeichnet, dass** das Energieversorgungssystem (200) dazu eingerichtet ist, elektrische Energie
i) mittels induktiver Kopplung zu übertragen, oder
ii) mittels resonant induktiver Kopplung zu übertragen.

11. Energieversorgungssystem nach einem der Ansprüche 9 und 10, **dadurch gekennzeichnet, dass** das Trennelement (210) eine optisch wahrnehmbare Markierung hinsichtlich des Bereichs aufweist, in welchem induktiv die Übertragung von Energie von der Sendeeinrichtung (50) auf die Empfangseinrichtung (205) vorgenommen werden kann.

12. Energieversorgungssystem nach einem der Ansprüche 9 bis 11, **dadurch gekennzeichnet, dass** das Energieversorgungssystem eine Erfassungseinrichtung zur Detektion der Versorgungseinrichtung in einem räumlichen Bereich aufweist, in dem mittels der Sendeeinrichtung (50) ein definiertes Magnetfeld erzeugbar oder erzeugt ist und/oder zur Freischaltung eines Versorgungsbetriebs bei Vorliegen einer Information hinsichtlich der Positionierung der Versorgungseinrichtung (201) in dem räumlichen Bereich.

13. Verfahren zur elektrischen Energieversorgung, bei dem ein Energieversorgungssystem gemäß einem der Ansprüche 9 bis 12 bereitgestellt wird, mittels der Sendeeinrichtung (50) ein Magnetfeld erzeugt wird und mittels des Magnetfeldes induktiv elektrische Energie auf die Versorgungseinrichtung (201) übertragen wird.

## Claims

1. A supply device (201) for supplying electrical energy, comprising a support structure (202) as well as a receiving device (205) in or on the support structure (202) for receiving electrical energy by means of inductive coupling and a connection device (206) in or on the supporting structure (202) for realizing an electrical connection at the receiving device (205),
**characterized in that** the supply device (201) comprises a detection unit for detecting a defined magnetic field and/or for reaching a defined position in relation to the detected magnetic field and/or for activating a supply operation upon detection of the magnetic field or the position,
wherein the detection unit is set up to depict a defined magnetic field and/or a defined position in relation to the detected magnetic field in a visually perceptible manner.

2. The supply device according to Claim 1, **characterized in that** the support structure (202) is a housing.

3. The supply device according to any one of the preceding claims, **characterized in that** at least one receiving device (205) for receiving electrical energy by means of inductive coupling is arranged on at least one side of the support structure (202).

4. The supply device according to any one of the preceding claims, **characterized in that** said supply device is set up for a transmission power of up to 3000 W

5. The supply device according to any one of the preceding claims, **characterized in that** the supply device (201) has at least one electrical energy storage unit.

6. The supply device according to any one of the preceding claims, **characterized in that** said supply device comprises at least one plug-in data interface for transmitting data.

7. The supply device according to any one of the preceding claims, **characterized in that** said supply device comprises at least one radio interface for transmitting data via a radio connection.

8. The supply device according to any one of the preceding claims, **characterized in that** the supply device (201) comprises a rectifier (234) for transforming alternating current into direct current.

9. An energy supply system (200), comprising a supply device (201) according to any one of the Claims 1 to 8 as well as a separating element (210) arranged or arrangeable at or in the supply device (201) as well as having a transmitting device (50) for generating a magnetic field for transmitting electrical energy to the supply device (201) by means of inductive coupling, wherein the transmitting device (50) is arranged on a side of the separating element (210) opposite a space-delimiting side of the separating element (210).

10. The energy supply system according to Claim 9, **characterized in that** the energy supply system (200) is set up to
i) transmit electrical energy by means of inductive coupling or
ii) transmit electrical energy by means of resonant inductive coupling.

11. The energy supply system according to any one of the Claims 9 and 10, **characterized in that** the separating element (210) has an optically perceptible marking regarding the region in which the transmission of energy from the transmitting device (50) to the receiving device (205) can be inductively performed.

12. The energy supply system according to any one of the Claims 9 to 11, **characterized in that** the energy supply system has a detection device for detecting the supply device in a spatial region in which a defined magnetic field is generatable or generated by means of the transmitting device (50) and/or for activating a supply operation in case of the presence of information regarding the positioning of the supply device (201) in the spatial region.

13. A method for supplying electrical energy in which an energy supply system according to any one of the Claims 9 to 12 is provided, a magnetic field is generated by means of the transmitting device (50), and electrical energy is transmitted inductively to the supply device (201) by means of the magnetic field.

## Revendications

1. Dispositif d'alimentation (201) pour l'alimentation en énergie électrique, comprenant une structure porteuse (202) ainsi que dans ou sur la structure porteuse (202) un dispositif de réception (205) pour la réception d'énergie électrique au moyen de couplage inductif et dans ou sur la structure porteuse (202) un dispositif de raccord (206) pour la réalisation d'un raccord électrique au dispositif de réception (205), **caractérisé en ce que** le dispositif d'alimentation (201) comprend un module de détection pour la détection d'un champ magnétique défini et/ou l'atteinte d'une position définie par rapport au champ magnétique détecté et/ou pour l'activation d'un mode d'alimentation en cas de détection du champ magnétique ou de la position, dans lequel le module de détection est configuré pour représenter de manière perceptible visuellement un champ magnétique défini et/ou une position définie par rapport au champ magnétique détecté.

2. Dispositif d'alimentation selon la revendication 1, **caractérisé en ce que** la structure porteuse (202) est un logement.

3. Dispositif d'alimentation selon une des revendications précédentes, **caractérisé en ce qu'**au moins un dispositif de réception (205) est disposé sur au moins un côté de la structure porteuse (202) pour la réception d'énergie électrique au moyen de couplage inductif.

4. Dispositif d'alimentation selon une des revendications précédentes, **caractérisé en ce que** celui-ci est configuré pour une puissance de transmission allant jusqu'à 3000 W.

5. Dispositif d'alimentation selon une des revendications précédentes, **caractérisé en ce que** le dispositif d'alimentation (201) présente au moins un accumulateur d'énergie électrique.

6. Dispositif d'alimentation selon une des revendications précédentes, **caractérisé en ce que** celui-ci comprend au moins une interface de données enfichable pour le transfert de données.

7. Dispositif d'alimentation selon une des revendications précédentes, **caractérisé en ce que** celui-ci comprend au moins une interface radio pour le transfert de données par le biais d'une connexion radio.

8. Dispositif d'alimentation selon une des revendications précédentes, **caractérisé en ce que** le dispositif d'alimentation (201) comprend un redresseur (234) pour la conversion de tension alternative en tension continue.

9. Système d'alimentation en énergie (200), comprenant un dispositif d'alimentation (201) selon une des revendications 1 à 8 ainsi qu'un élément de séparation (210) sur ou dans lequel le dispositif d'alimentation (201) est disposé ou peut être disposé, ainsi qu'avec un dispositif d'émission (50) pour la génération d'un champ magnétique dans le but de transmettre de l'énergie électrique au moyen de couplage inductif au dispositif d'alimentation (201), dans lequel le dispositif d'émission (50) est disposé sur un côté de l'élément de séparation (210) qui s'oppose à un côté limitant l'espace de l'élément de séparation (210).

10. Système d'alimentation en énergie selon la revendication 9, **caractérisé en ce que** le système d'alimentation en énergie (200) est configuré pour transmettre de l'énergie électrique
i) au moyen de couplage inductif, ou
ii) au moyen de couplage inductif par résonance.

11. Système d'alimentation en énergie selon une des revendications 9 et 10, **caractérisé en ce que** l'élément de séparation (210) présente un marquage perceptible optiquement concernant la région dans laquelle la transmission d'énergie du dispositif d'émission (50) au dispositif de réception (205) peut être effectuée de manière inductive.

12. Système d'alimentation en énergie selon une des revendications 9 à 11, **caractérisé en ce que** le système d'alimentation en énergie présente un dispositif de détection pour la détection du dispositif d'alimentation dans une région spatiale dans laquelle un champ magnétique défini peut être généré ou est généré au moyen du dispositif d'émission (50) et/ou pour l'activation d'un mode d'alimentation en cas de présence d'une information concernant le positionnement du dispositif d'alimentation (201) dans la région spatiale.

13. Procédé d'alimentation en énergie électrique, lors duquel un système d'alimentation en énergie selon une des revendications 9 à 12 est mis à disposition, un champ magnétique est généré au moyen du dispositif d'émission (50) et de l'énergie électrique est transmise de manière inductive au dispositif d'alimentation (201) au moyen du champ magnétique.
